(19) Europäisches Patentamt
European Patent Office
Office européen des brevets

(11) **EP 2 257 613 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **09724933.8**

(22) Anmeldetag: **27.02.2009**

(51) Int Cl.:
*C10J 3/48* (2006.01)     *C10J 3/52* (2006.01)
*C10J 3/84* (2006.01)     *B01J 8/00* (2006.01)
*B01J 8/18* (2006.01)

(86) Internationale Anmeldenummer:
**PCT/EP2009/001396**

(87) Internationale Veröffentlichungsnummer:
**WO 2009/118082 (01.10.2009 Gazette 2009/40)**

(54) **VORRICHTUNG ZUR HERSTELLUNG VON SYNTHESEGAS MIT EINEM VERGASUNGSREAKTOR MIT ANSCHLIESSENDEM QUENCHRAUM**

DEVICE FOR PRODUCING SYNTHESIS GAS WITH A GASIFICATION REACTOR AND CONNECTED TO A QUENCH CHAMBER

DISPOSITIF DE PRODUCTION DE GAZ DE SYNTHÈSE UN RÉACTEUR DE GAZÉIFICATION CONNECTÉ À UNE CHAMBRE DE TREMPE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.03.2008 DE 102008015801**
**14.11.2008 DE 102008057410**
**21.01.2009 DE 102009005464**

(43) Veröffentlichungstag der Anmeldung:
**08.12.2010 Patentblatt 2010/49**

(73) Patentinhaber: **ThyssenKrupp Industrial Solutions AG**
**45143 Essen (DE)**

(72) Erfinder: **KOWOLL, Johannes**
**44799 Bochum (DE)**

(74) Vertreter: **Kutzenberger Wolff & Partner**
**Theodor-Heuss-Ring 23**
**50668 Köln (DE)**

(56) Entgegenhaltungen:
**EP-A- 0 099 833     EP-A- 0 400 740**
**EP-A- 0 699 734     WO-A-2007/089254**
**DE-A1- 4 025 955     US-A- 4 369 045**
**US-A- 4 605 423     US-A- 5 782 032**

**Beschreibung**

Die Erfindung richtet sich auf eine Vorrichtung zur Herstellung von CO- und $H_2$-haltigem Rohgas durch Vergasung von aschehaltigem Brennstoff mit sauerstoffhaltigem Gas bei Temperaturen oberhalb der Schmelztemperatur der Asche in einem Vergasungsreaktor und mit einem anschließenden Gasabkühlungsraum und einem sich verjüngenden Übergangskanal von einem Raum in den anderen.

Derartige Vorrichtungen sind z.B. aus der EP 0 616 022 B1, der EP 0 699 734 A1 oder der EP 0 400 740 B1 bekannt. Eine vergleichbare Konstruktion zeigt auch die DE 10 2005 048 488 A, wobei zum Stand der Technik auch noch die EP 0 431 266 A1, die DE 10 2006 029 595 A1 oder die US 5 782 032 zu zählen sind.

Bei Vergasern konventioneller Bauart wird in der Regel 30 bis 60 % der Brennstoffasche in Flugasche umgewandelt, was die Nachteile mit sich bringt, dass sich Ablagerungen im Rohgasweg bilden und es zu erhöhten Errosionen nachgeschalteter Apparaturen kommen kann. Die Abscheidung und Ausschleusung der Flugasche ist deutlich aufwändiger und teurer als die der Schlacke. Die Entsorgung der Flugasche ist ebenfalls teurer, da zum Teil Schwermetalle in der Flugasche sein können, zumal handelt es sich in der Regel um sehr feinen Staub, der nicht offen deponiert werden kann.

Die oben schon erwähnte EP 0 400 740 B zeigt ein verjüngtes Rohr mit Einbauten, die zu Verstopfungen führen können, zudem versperren die Einbauten den Zugang zu den darunter befindlichen Räumen bei Inspektion und Wartung. Die notwendige Kühlung der fadenkreuzähnlichen Einbauten führt darüber hinaus zum Erstarren der Schlacke, was zu Verstopfungen führen kann.

Die EP 0 431 266 weist ebenfalls einen hohen Flugaschestrom im Vergaseraustritt und schlechten Brennstoffumsatz im Vergaser auf, weil ein Teil der noch reagierenden und kohlenstoff- und aschehaltigen Gase aus der Brennerebene schnell und ohne Umlenkung zum Vergaseraustritt strömt, da kein Drall vorgesehen ist. Es ist bekannt, dass ein Drall im Vergaser das aus der Brennerebene ausströmende Gas zuerst gegen die Wand umlenkt, wodurch ein Teil der Flugasche an der Wand abgeschieden und die Verweilzeit der Brennstoffpartikel im Vergaser verlängert wird.

Auch ist bekannt, dass je stärker der Drall ist, um so intensiver der Stoffaustausch im Vergaser ist. Dabei kommt es zu einer stärkeren Abscheidung der Asche. Ein hoher Drall im Vergaseraustritt verursacht jedoch, wie oben schon kurz angesprochen, Schwierigkeiten in nachgeschalteten Apparaten, da die heißen Gase und Schlackepartikel mit hoher tangentialer Geschwindigkeit in Richtung der Wände geschleudert werden. Aus diesem Grunde wird im Vergaser nur ein schwacher Drall bevorzugt, z.B. Feuerungswinkel von 3°.

Hier setzt die Erfindung an, deren Aufgabe neben der Vermeidung oben beschriebener Nachteile darin besteht, sowohl die Flugaschenmenge zu verringern als auch die Mengen der unvergasten Brennstoffe, wobei ein nur schwacher Drall im Eintritt der nachgeschalteten Apparate erreicht werden soll, um dort Ablagerungen zu vermeiden bei einer sehr kompakten Vorrichtung, wobei es nicht zur Gefahr der Erstarrung der Schlacke im Auslauf kommen soll.

Mit einer Vorrichtung der eingangs bezeichneten Art wird diese Aufgabe gemäß der Erfindung dadurch gelöst, dass im verjüngten Übergangskanal drallvermindernde bzw. -verhindernde, nur einen Teil des Querschnittes des Übergangskanales durchsetzende, von Kühlrohren gebildete Wandflächen vorgesehen sind, wobei der verjüngte Kanal in Strömungsrichtung hinter den Wandflächen einen ersten Mischbereich auffasst, und dass der verjüngte Übergangskanal an seinem in Schwerkraftrichtung unten liegenden Ende mit einer Einschnürung mit Abtropfkante ausgerüstet ist und dass die Einschnürung am verjüngten Übergangskanal zusätzlich von einem weiteren Mischrohr umgeben ist zur Bildung eines zusätzlichen Mischraumes.

Es hat sich gezeigt, dass diese vergleichsweise schmal ausgebildeten Wandflächen optimal als Drallbremsen eingesetzt werden können, ohne den Durchgangsquerschnitt des Übergangskanales unnötig zu verkleinern.

Dadurch dass der verjüngte Übergangskanal an seinem in Schwerkraftrichtung unten liegenden Ende mit einer Einschnürung mit Abtropfkante ausgerüstet ist, wird eine Reihe zusätzlicher Vorteile erreicht:

Bei der Vermischung von entgegenströmenden Gasschichten und bei Beschleunigen und Ändern der Richtung des Gases prallen die im Gas vorhandenen und von diesem getragenen Schlackepartikel aufeinander und verbacken, wodurch größere Partikel gebildet werden, die an den Wänden abgeschieden werden können, so dass der Gehalt der Aschepartikel sich im Gas deutlich verringert. Dabei ist auch von Vorteil, dass die Einschnürung am verjüngten Übergangskanal zusätzlich von einem weiteren Mischrohr zur Bildung eines zusätzlichen Mischraumes umgehen ist.

Ausgestaltungen der Erfindung ergeben sich aus den Unteransprüchen. Es hat sich in der Praxis gezeigt, dass selbst dann, wenn die Kühlrohre einen gewissen Abstand zueinander aufweisen, sich durch das bereichsweise Anbacken von Schlacke rasch eine geschlossene Wand ausbildet, die den Drall mindert oder bis zum Ende des Übergangskanales weitgehend unterbindet.

Um dieser Drallbremsfunktion weiter gerecht zu werden, kann in Ausgestaltung der Erfindung vorgesehen sein, dass die Wandflächen eine in Längsrichtung leicht gewundene Gestaltung aufweisen, die zweckmäßig gegen die im Vergaser herrschende Drallrichtung ausgerichtet sind.

Zusätzlich kann nach der Erfindung vorgesehen sein, dass am in Schwerkraftrichtung unteren Ende der Wandflächen eine die Schlacke auffangende gekühlte Rinne zur Ausleitung der Schlacke aus dem Quenchraum vorgesehen ist.

Um das Ausleiten der Schlacke zu optimieren, kann nach der Erfindung darüber hinaus vorgesehen sein, dass bei einer Mehrzahl von die Wandflächen bildenden Kühlrohren die in Schwerkraftrichtung unteren Rohrbereiche benachbarter Rohre einen von einem Sammelsteg überbrückenden Abstand zueinander aufweisen, wobei der Sammelsteg in die Schlackeableitrinne mündet.

In der DE 40 25 955 A1 wird eine Vorrichtung zum Austragen von Rohgas und Schlacke aus einem Vergaser beschrieben, wobei die Wände eines verjüngten Übergangskanales aus einem spiralförmigen gewickelten Rohr gebildet wird. Dort wird ein Tauchrohr über einen Rieselfilm gekühlt, die Einrichtung dient insbesondere zur Ausweitung von Schlacke. In der US 4 369 045 ist ein Austrag für Asche aus einem Wirbelschichtvergaser beschrieben, wobei eine drallverminderte spiralförmiger Körper im verjüngten Venturi-Übergangskanal eingebracht ist. Besondere Maßnahmen zur Kühlung sind hier nicht vorgesehen.

Die Erfindung sieht in Ausgestaltung auch vor, dass der Durchmesser des verjüngten Kanales 0,1 bis 0,5 des Vergaserdurchmessers beträgt, wobei die durch die vertikalen Randkanten der Drallverminderungswände verbleibende lichte Weite im Inneren $\geq 500$ mm beträgt. Dadurch ist es möglich, dass eine Person zur Überprüfung des Innenraumes der Vorrichtung durch diesen Bereich hindurch klettern kann.

Da Drall dem Radius proportinal ist, wird er durch die in der Randzone befindlichen Flächen stark verringert. Abhängig von der gewünschten Abschwächung des Dralls soll die Länge der drallbremsenden Flächen zwischen 0,5 und 4 Durchmesser des Verbindungskanales betragen.

Aufgrund der erfindungsgemäßen "Drallbremse" ist es möglich, einen Feuerungswinkel von 5 bis 10° bezogen auf die entsprechende Sekante der Brenneranordnung vorzusehen, ebenso wie andere Drallkörper und Einbauten, um eine erhöhte Zirkulation im Vergaser und damit eine intensive Vermischung zu erreichen, wie dies die Erfindung ebenfalls vorsieht.

Durch diese Maßnahme wird der Brennstoffumsatz erhöht und das Zusammenbacken der Aschepartikel verstärkt, womit auch die Abscheidung dieser Partikel verbessert wird.

Schließlich ist es möglich, den Wärmestrom aus der Bilanz des Kühlmediums kontinuierlich zu ermitteln und damit die Schlackedichte an den Wänden der Vorrichtung z.B. online zu berechnen, wozu ein Beispiel angegeben sei:

- Kühlung durch Verdampfung des Kesselspeisewassers in Rohren der Vorrichtung
- gemessen werden Menge und Temperatur des in die Vorrichtung eingespeisten Wassers und die Menge und Druck des erzeugten Dampfes. Daraus werden der Wärmestrom und die Wärmestromdichte ermittelt
- die mittlere Schichtstärke der festen Schlacke hängt reziprok von der Wärmestromdichte ab und kann annähernd mit folgender Formel berechnet werden:

$$\text{Schichtdicke} = \text{Lambda} * (T_F - T_K)/q$$

wobei

Lambda - Wärmeleitfähigkeit der Schlacke
$T_F$ - Erstarrungstemperatur der Schlacke
$T_K$ - Siedetemperatur des Wassers

- Mit dieser Methode bekommt man online-Information über die Schichtstärke der festen Schlacke. Ist die Schicht zu dick, z.B. > 50 mm, kann sofort die Sauerstoffmenge und dadurch die Vergasungstemperatur erhöht werden. Ist dagegen die Wärmestromdichte zu hoch, z.B. >200 kW/m$^3$, kann z.B. die Sauerstoffmenge verringert oder die Menge des Moderationsgases ($H_2O$ oder $CO_2$) erhöht werden.

Die an den Vergaserwänden abgeschiedene Schlacke fließt überwiegend im Außenbereich der Vorrichtung ab, wodurch die Schlackeschicht dort besonders dick und die Wärmestromdichte besonders niedrig ist.

Dagegen werden die Flächen im zentralen Bereich des Querschnittes kaum durch die herabfließende Schlacke bedeckt, wodurch nur eine dünne Schlackeschicht an diesen Flächen entsteht. Separate Messungen der Wärmestromdichte im Außenbereich und an Flächen im zentralen Bereich des verjüngten Kanals liefern daher zwei wichtige Informationen für die Steuerung der Vergasertemperatur:

- im peripheren Bereich kann die dickste Schlackeschicht ermittelt werden, um die drallbremsenden Einbauten vor Zuwachsen mit Schlacke durch Erhöhung der zeitgemittelten Temperatur schützen zu können,

- im zentralen Bereich wird die höchste Wärmestromdichte gemessen, wobei schnelle Änderungen der Wärmestromdichte erfasst werden können, um kurzdauernde Änderungen der Vergasungstemperatur schnell korrigieren zu können.

Es kann zweckmäßig sein, wenn die Innenseite der Wand des Mischrohres metallisch (gekühlt, aber unbestampft) ausgebildet ist, was erfindungsgemäß ebenfalls vorgesehen ist.

Nach der Erfindung kann auch vorgesehen sein, dass der Durchmesser des weiteren Mischrohres und der Abstand des freien Randes des Mischrohres relativ zur Abtropfkante dem Erstarrungsverhalten der anfallenden Schlacke angepasst ist. Erstarrt die Schlacke z.B. schlagartig bei hoher Temperatur, wie z.B. 1.200°C, kann ein kleinerer Durchmesser gewählt werden, um die Rückströmung von kaltem Gas aus dem Quenchbereich in den Mischraum zu minimieren und damit das Erstarren der Schlacke an der Abtropfkante zu verhindern. Je niedriger die Erstarrungstemperatur der Schlacke desto größer kann der Durchmesser des zusätzlichen Mischrohres gewählt werden. Bei niedrigen Erstarrungstemperaturen erfolgt eine intensivere Rückströmung des kaltes Gases und die Temperatur im Mischraum wird niedriger, so dass keine Flugaschepartikel mit klebriger Oberfläche am zusätzlichen Mischrohr haften.

Dabei ist es zweckmäßig, wenn der sich ideell ergebende Erweiterungswinkel zwischen Abtropfkante einerseits und dem freien Rand des Mischrohres andererseits im Bereich von 10° bis 30° liegt, wobei nach der Erfindung auch vorgesehen ist, dass der Radius des weiteren Mischrohres um 0,1 bis 1 m größer ist als der Radius der Abtropfkante.

Weitere Merkmale, Einzelheiten und Vorteile der Erfindung ergeben sich aufgrund der nachfolgenden Beschreibung sowie anhand der Zeichnung. Diese zeigt in

Fig. 1 in schematischer Darstellung einen Druckbehälter mit Reaktor und Quenchraum,

Fig. 2a einen Schnitt in schematischer Darstellung etwa gemäß Linie II-II in Fig. 1,

Fig. 2b einen Schnitt in schematischer Darstellung etwa gemäß Linie IIb-IIb in Fig. 1,

Fig. 3 eine abgewandelte Darstellung der Darstellung gemäß Fig. 1,

Fig. 4 ein Ausführungsbeispiel wobei der untere Rand des verjüngten Kanals mit einer Sammelrinne ausgestattet ist,

Fig. 5 eine Seiten- und Frontansicht einer strömungsausrichtenden Wand, eingebaut im Übergangskanal vom Reaktor zum Quenchraum sowie in

Fig. 6 ein Ausführungsbeispiel der Erfindung

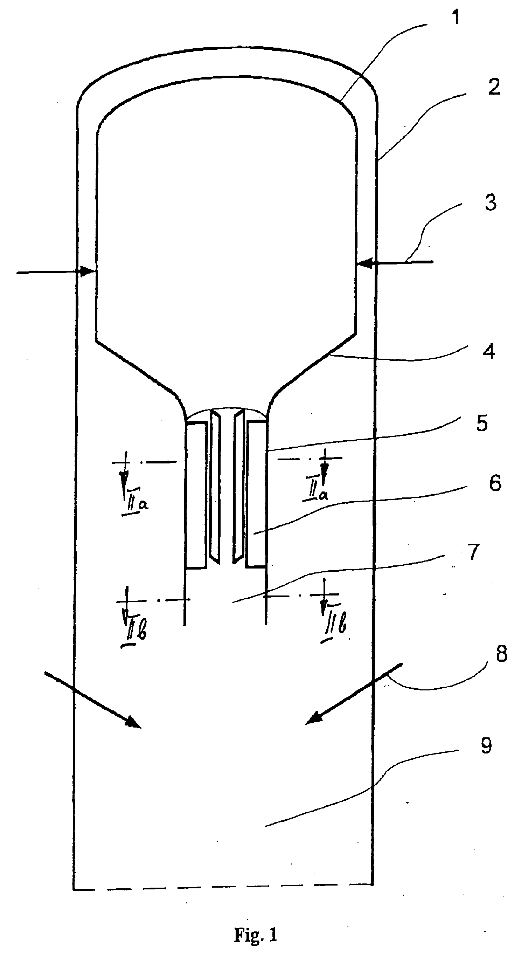

In Fig. 1 ist in vereinfachter Darstellung ein Reaktor 1 in einem Druckbehälter 2 im Schnitt dargestellt, wobei die den Reaktor 1 beaufschlagenden Brenner lediglich als Pfeile 3 angedeutet sind.

Erkennbar geht der mit 4 bezeichnete trichterförmige Vergaserboden in einen verjüngten Kanal 5 über, der mit strömungsrichtenden Einbauten 6 zur Drallverminderung des den Reaktor verlassenden Gemisches versehen ist.

Dabei weist der verjüngte Kanal 5 in Strömungsrichtung hinter den Einbauten 6 einen ersten Mischbereich 7 auf, der dann in den mit 9 bezeichneten Gasabkühlungsraum, z.B. einem Quenchraum, mündet, wobei die Zufuhr des Quenchmediums mit Pfeilen 8 angedeutet ist.

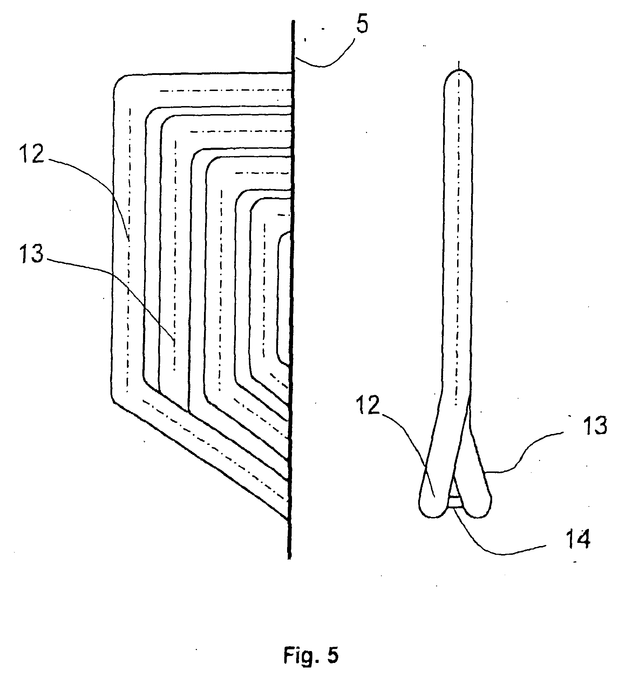

Die strömungsrichtenden Einbauten können als Rohrwände, die von einem Kühlmedium durchströmt werden, ausgebildet sein, wie dies weiter unten in Bezugnahme auf Fig. 5 näher beschrieben ist. Zusätzlich können die Wände bestiftet und bestampft sein, um die Einbindung der Schlacke zu erleichtern und die Wärmestromdichte zu verringern.

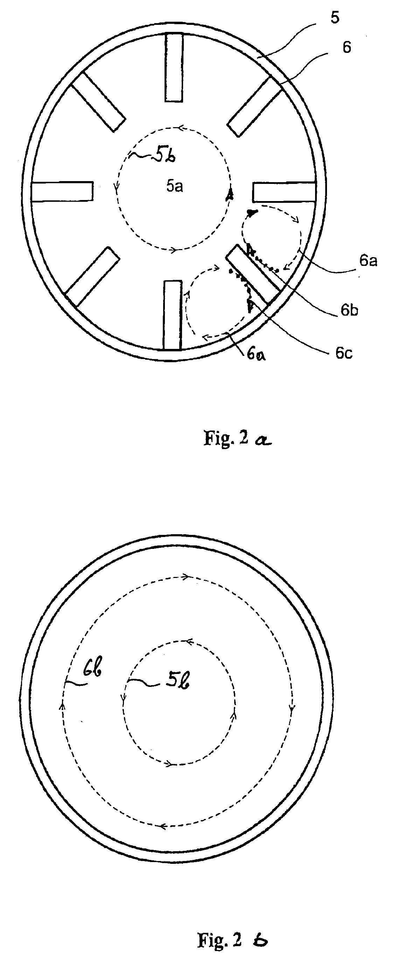

In Fig. 2a ist angedeutet, dass die Einbauten 6 gemäß Fig. 1 radial nach innen weisend in den Innenraum des Kanales 5 gerichtet sind, wobei ein mit 5a bezeichneter Innenquerschnitt frei von Einbauten gehalten ist. Dieser Innenquerschnitt 5a ist dabei so groß gewählt, dass eine Person hindurch steigen kann, um etwa Wartungsarbeiten im Quenchraum 9 durchführen zu können.

Der Innenquerschnitt 5a wird kaum gekühlt, wodurch Erstarren der Schlacke und vollständige Verstopfung nicht befürchtet werden müssen.

In Fig. 2a ist noch durch gestrichelte Pfeile die sich ausbildende Drallbewegung der Strömung angedeutet. In den Räumen zwischen den Einbauten 6 ergeben sich Drallströmungen 6a in Gegenrichtung der Strömung in dem einbaufreien Innenraum, in Fig. 2a durch Pfeile 5b angedeutet. Die Drallströmungen 6a zwischen den Einbauten 6 sind so gerichtet, dass beispielsweise die Zirkulationsströmungen an den Wänden der Einbauten 6 entgegengesetzt gerichtet sind, was durch die punktierten Teilpfeile 6b und 6c angedeutet ist. Die zum Inneren weisenden Teilbereiche der Strömung 6a sind in gleicher Richtung gerichtet wie die Rotationsströmung 5b.

Fallen die Einbauten weg, so zeigt die Schnittzeichnung gemäß Linien IIb-IIb in Fig. 1, dass in diesem Bereich die Strömungen 5b und 6b entgegengesetzt gerichtet sind und sich gegenseitig bremsen und ggf. am unteren Ende des Kanales 5 ganz aufgelöst haben.

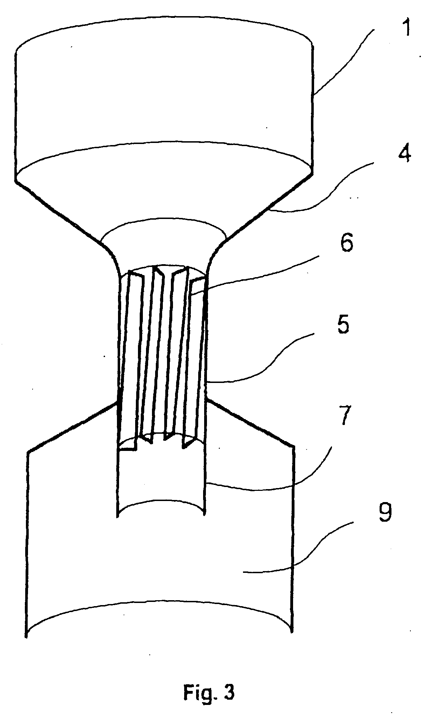

In Fig. 3 bildet der Quenchraum 9 ein eigenes Bauteil und ist nicht, wie im Beispiel der Fig. 1 Teil des Druckbehälters.

Im Unterschied zu Fig. 1 sind bei der Fig. 3 die drallvermindernden Einbauten 6 gekrümmt bzw. in Strömungsrichtung schräg gestellt, und zwar gegen die Drallrichtung des Reaktors 1 verlassenden Gemisches.

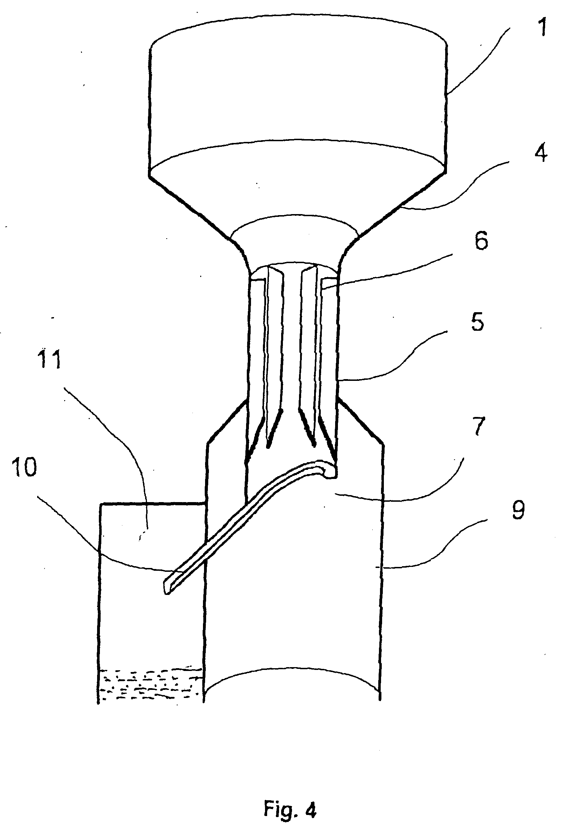

In Fig. 4 ist der untere Rand des verjüngten Kanales mit einer ggf. ebenfalls gekühlten Sammelrinne zum Ableiten der flüssigen Asche ausgestattet, wobei diese Sammelrinne, mit 10 bezeichnete, in einem getrennten Raum 11 mit Schlackebad mündet. Durch das Ausleiten der Schlacke über die gekühlte Rinne 10 in den Schlackebadraum 11 fällt die Schlacke getrennt und ohne feine Feststoffe an, wodurch es möglich, das aus dem Kanal 5 ausströmende Gas nicht nur mit Wasser zu quenchen, sondern mit einem kälteren Gas, um dadurch ein heißes Trocknungsgas zu erzeugen, das z.B. auch als Reduktionsgas eingesetzt werden kann.

Die Rohrwände 6 können dabei so mit Kerben, Rippen oder durch Schrägstellung gestaltet sein, so dass die Schlacke von deren Oberfläche in Richtung auf die Wand des Kanales fließt, um dann in die Rinne 10 abgeleitet zu werden.

In Fig. 5 ist als Beispiel die Ausgestaltung einer derartigen drallvermindernden Wand wiedergegeben. Sie besteht aus nebeneinander angeordneten Kühlrohren, mit 12 und 13 bezeichnet, deren in Schwerkraftrichtung liegende untere Bereich schräg gestellt und wenigstens teilweise gespreizt ist, derart, dass zwischen den unteren schräggestellten Rohren ein Steg 14 positioniert werden kann, um das Abfließen der Schlacke dort zu vereinfachen, die dann in Richtung Rohrwand 5 fließt und von dort ggf. in eine in Fig. 5 nicht dargestellte Rinne zum Ableiten, wie oben beschrieben.

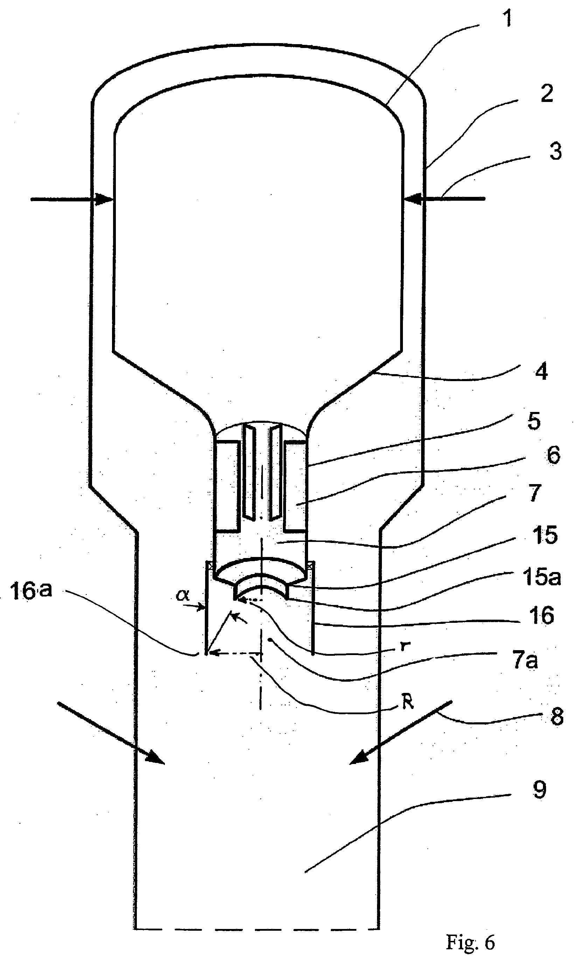

In Fig. 6 ist ein Beispiel dargestellt mit verkürztem Kanal bzw. Mischrohr 5, welches an seinem in Schwerkraftrichtung unteren Ende mit einer Einschnürung 15 ausgerüstet ist, die eine Abtropfkante 15a aufweist. Durch diese Einschnürung bzw. Verengung 15 werden die in Fig. 2b dargestellten gegenläufigen Wirbel 5b und 6b gezwungen, sich aufeinanderzu zu bewegen, so dass der sich durch den Wirbel aufhebende Effekt hierdurch stark vergrößert wird, so dass eine entsprechende Aufhebung praktisch schon am Ende der Einschnürung bzw. Verengung 15 vorliegt.

Bei diesem Ausführungsbeispiel der Erfindung ist die Austrittsöffnung bzw. Abtropfkante 15a noch von einem weiteren Mischrohr 16 umgeben, das einen weiteren Mischraum 7a definiert. Dieses Mischrohr 16 verhindert auch eine Rückströmung des kalten Gases aus dem Quenchraum 9 an die Umgebung der Abtropfkante 15a, wodurch ein Erstarren der Schlacke und damit die Bildung von Stalaktiten oder anderen hängenden anwachsenden Verunreinigungen im Zylinder ausgeschlossen wird.

In Fig. 6 ist noch durch zwei gestrichelte Pfeile der Radius "r" der Abtropfkante 15a und der Radius "R" des zusätzlichen Mischrohres 16 angegeben sowie ein ideeller Winkel "$\alpha$", der sich aus der Verbindungslinie zwischen Abtropfkante 15a und freier Randkante 16a des zusätzlichen Mischrohres 16 ergibt. Je höher die Erstarrungstemperatur der Schlacke ist desto kleiner kann der Winkel $\alpha$ ausgebildet sein und desto geringer ist der Unterschied zwischen r und R, wobei in der Praxis R etwa 0,1 bis 1 m größer sein kann als r. Der Winkel $\alpha$ liegt zweckmäßig zwischen 10° und 30°.

Um Strahlen oder Strähnen von Schlackeflüssen zu formen, kann die Einschnürung 15 noch eine wellige Oberfläche aufweisen, was hier nicht näher dargestellt ist.

Natürlich sind die beschriebenen Ausführungsbeispiele der Erfindung noch in vielfacher Hinsicht abzuändern, ohne den Grundgedanken zu verlassen. Dies gilt insbesondere für die symmetrische Ausgestaltung der gekühlten Wandflächen 6 im Übergangskanal 5. Bei einer alternativen Vergaserart mit Gasaustritt aufwärts durch eine Austrittsöffnung in der Decke wird der verjüngte Übergangskanal über dieser Öffnung eingebaut und die an den Flächen des Kanales abgeschiedene Schlacke fließt oder fällt abwärts in den Vergaser. Die Abkühlung des Gases im Raum 9 kann durch Quenchen, Strahlung oder Konvektion erfolgen. In den Raum können auch reagierende Substanzen dosiert werden, z.B. Kalkstein, um Schwefelverbindungen zu entfernen.

**Patentansprüche**

1. Vorrichtung zur Herstellung von CO- oder $H_2$-haltigem Rohgas durch Vergasung von aschehaltigem Brennstoff mit sauerstoffhaltigem Gas bei Temperaturen oberhalb der Schmelztemperatur der Asche umfassend einen Vergasungsreaktor (1) mit einem anschließenden Gasabkühlungsraum (9) und einem sich verjüngenden Übergangskanal von einem Raum in den anderen,
**dadurch gekennzeichnet**,

   - dass im verjüngten Übergangskanal (5) drallvermindernde bzw. -verhindernde, nur einen Teil des Querschnittes des Übergangskanales durchsetzende, von Kühlrohren gebildete Wandflächen (6) vorgesehen sind, wobei der verjüngte Kanal (5) in Strömungsrichtung hinter den Wandflächen (6) einen ersten Mischbereich (7) auffasst,
   - dass der verjüngte Übergangskanal (5) an seinem in Schwerkraftrichtung unten liegenden Ende mit einer

EP 2 257 613 B1

Einschnürung (15) mit Abtropfkante (15a) ausgerüstet ist und
- dass die Einschnürung (15) am verjüngten Übergangskanal (5) zusätzlich von einem weiteren Mischrohr (16) umgeben ist zur Bildung eines zusätzlichen Mischraumes (7a).

2. Vorrichtung nach Anspruch 1,
**dadurch gekennzeichnet,**
**dass** die Wandflächen (6) eine in Längsrichtung leicht gewundene Gestaltung aufweisen.

3. Vorrichtung nach Anspruch 1 oder 2,
**dadurch gekennzeichnet,**
**dass** am in Schwerkraftrichtung unteren Ende der Wandflächen (6) eine die Schlacke auffangende gekühlte Rinne (10) zur Ausleitung der Schlacke aus dem Quenchraum vorgesehen ist.

4. Vorrichtung nach einem der vorangehenden Ansprüche,
**dadurch gekennzeichnet,**
**dass** bei einer Mehrzahl von die Wandflächen bildenden Kühlrohren (12,13) die in Schwerkraftrichtung unteren Rohrbereiche benachbarter Rohre einen von einem Sammelsteg (14) überbrückenden Abstand zueinander aufweisen, wobei der Sammelsteg (14) in die Schlackeableitrinne mündet.

5. Vorrichtung nach einem der vorangehenden Ansprüche,
**dadurch gekennzeichnet,**
**dass** der Durchmesser des verjüngten Kanales (5) 0,1 bis 0,5 des Vergaserdurchmessers beträgt, wobei die durch die vertikalen Randkanten der Drallverminderungswände verbleibende lichte Weite im Inneren (5a) $\geq 500\,mm$ beträgt.

6. Vorrichtung nach einem der vorangehenden Ansprüche,
**dadurch gekennzeichnet,**
**dass** ein Feuerungswinkel von 5 bis 10° bezogen auf die entsprechende Sekante der Brenneranordnung vorgesehen ist, ebenso wie andere Drallkörper und Einbauten, um eine erhöhte Zirkulation im Vergaser und damit eine intensive Vermischung zu erreichen.

7. Vorrichtung nach einem der vorangehenden Ansprüche,
**dadurch gekennzeichnet,**
**dass** die Innenseite der Wand des Mischrohres (16) metallisch ausgebildet ist.

8. Vorrichtung nach Anspruch 7,
**dadurch gekennzeichnet,**
**dass** der Durchmesser des weiteren Mischrohres (16) und der Abstand des freien Randes (16a) des Mischrohres (16) relativ zur Abtropfkante (15a) dem Erstarrungsverhalten der anfallenden Schlacke angepasst ist.

9. Vorrichtung nach Anspruch 8,
**dadurch gekennzeichnet,**
**dass** der sich ideell ergebende Erweiterungswinkel ($\alpha$) zwischen Abtropfkante (15a) und dem freien Rand (16a) des Mischrohres (16) im Bereich von 10° bis 30° liegt.

10. Vorrichtung nach Anspruch 8,
**dadurch gekennzeichnet,**
**dass** der Radius des weiteren Mischrohres (16) um 0,1 bis 1 m größer ist als der Radius der Abtropfkante (15a).

**Claims**

1. Device for producing CO- or $H_2$-containing raw gas by gasification of ash-containing fuel with oxygen-containing gas at temperatures above the melting temperature of the ash, comprising a gasification reactor (1) with an adjoining gas cooling chamber (9) and a narrowing transition duct from one chamber to the other,
**characterized in that**

- there are provided, in the narrowed transition duct (5), swirl-reducing or -preventing wall surfaces (6) that cover only part of the cross section of the transition duct and are formed by cooling pipes, wherein the narrowed duct (5) encompasses, downstream of the wall surfaces (6), a first mixing region (7),
- the narrowed transition duct (5) is equipped, at its lower end in the direction of gravity, with a neck (15) with a drop-off edge (15a), and
- the neck (15) on the narrowed transition duct (5) is additionally surrounded by a further mixing tube (16) to form an additional mixing chamber (7a) .

2. Device according to Claim 1,
**characterized in that**
the wall surfaces (6) are slightly twisted in the longitudinal direction.

3. Device according to Claim 1 or 2,
**characterized in that**
there is provided, at the lower end in the direction of gravity of the wall surfaces (6), a trough (10) which catches the slag in order to remove the slag from the quench chamber.

4. Device according to one of the preceding claims,
**characterized in that**
in the case of a multiplicity of cooling pipes (12, 13) forming the wall surfaces, the lower pipe regions in the direction of gravity of adjacent pipes have, with respect to one another, a separation that is bridged by a collecting web (14), wherein the collecting web (14) discharges into the slag removal trough.

5. Device according to one of the preceding claims,
**characterized in that**
the diameter of the narrowed duct (5) is 0.1 to 0.5 times the diameter of the gasifier, wherein the internal width (5a) remaining unobstructed by the vertical rim edges of the swirl-minimizing walls is $\geq 500$ mm.

6. Device according to one of the preceding claims,
**characterized in that**
a firing angle of 5 to 10° with respect to the corresponding secant of the burner arrangement is provided, as is also the case for other baffles and inserts, in order to achieve increased circulation in the gasifier and thus intensive mixing.

7. Device according to one of the preceding claims,
**characterized in that**
the inside of the wall of the mixing tube (16) is metallic.

8. Device according to Claim 7,
**characterized in that**
the diameter of the further mixing tube (16) and of the separation between the free rim (16a) of the mixing tube (16) relative to the drop-off edge (15a) is adapted to the solidification behaviour of the resulting slag.

9. Device according to Claim 8,
**characterized in that**
the resulting ideal widening angle ($\alpha$) between the drop-off edge (15a) and the free rim (16a) of the mixing tube (16) is in the range from 10° to 30°.

10. Device according to Claim 8,
**characterized in that**
the radius of the further mixing tube (16) is between 0.1 m and 1 m greater than the radius of the drop-off edge (15a).

**Revendications**

1. Dispositif de production de gaz brut contenant du CO et du $H_2$ par gazéification de combustible contenant des cendres avec un gaz contenant de l'oxygène à des températures supérieures à la température de fusion des cendres, comprenant un réacteur de gazéification (1) avec une chambre suivante (9) de refroidissement du gaz et un canal de transition se rétrécissant d'une chambre à l'autre,
**caractérisé en ce que**

- il est prévu dans le canal de transition rétréci (5) des faces de paroi (6) réduisant ou empêchant les tourbillons, ne traversant qu'une partie de la section transversale du canal de transition et formées par des tubes de refroidissement, dans lequel le canal rétréci (5) comprend une première zone de mélange (7) derrière les faces de paroi (6) dans la direction d'écoulement,

- le canal de transition rétréci (5) est équipé à son extrémité située en bas dans la direction de la gravité d'un étranglement (15) avec une arête d'égouttage (15a), et

- l'étranglement (15) sur le canal de transition rétréci (5) est en outre entouré d'un autre tube de mélange (16), pour la formation d'une chambre de mélange supplémentaire (7a).

2. Dispositif selon la revendication 1, **caractérisé en ce que** les faces de paroi (6) présentent une forme légèrement ondulée en direction longitudinale.

3. Dispositif selon la revendication 1 ou 2, **caractérisé en ce qu'**il est prévu à l'extrémité inférieure des faces de paroi (6) dans la direction de la gravité un chenal refroidi (10) recueillant la scorie afin d'évacuer la scorie hors de la chambre de trempe.

4. Dispositif selon l'une quelconque des revendications précédentes, **caractérisé en ce que**, dans le cas d'une multiplicité de tubes de refroidissement (12, 13) formant les faces de paroi, les régions de tubes inférieures dans la direction de la gravité de tubes voisins présentent l'une par rapport à l'autre une distance occupée par une nervure de collecte (14), dans lequel la nervure de collecte (14) débouche dans le chenal d'évacuation de scorie.

5. Dispositif selon l'une quelconque des revendications précédentes, **caractérisé en ce que** le diamètre du canal rétréci (5) vaut 0,1 à 0,5 fois le diamètre du gazéificateur, dans lequel la largeur libre laissée par les côtés de bord verticaux des parois de réduction des tourbillons dans l'intérieur (5a) vaut $\geq 500$ mm.

6. Dispositif selon l'une quelconque des revendications précédentes, **caractérisé en ce qu'**il est prévu un angle de feu de 5 à 10° par rapport à la sécante correspondante du dispositif de brûleur, ainsi que d'autres corps à tourbillons et inserts, afin d'atteindre une circulation élevée dans le gazéificateur et dès lors un mélange intime.

7. Dispositif selon l'une quelconque des revendications précédentes, **caractérisé en ce que** le côté intérieur de la paroi du tube de mélange (16) est métallique.

8. Dispositif selon la revendication 7, **caractérisé en ce que** le diamètre de l'autre tube de mélange (16) et la distance du bord libre (16a) du tube de mélange (16) par rapport à l'arête d'égouttage (15a) est adaptée au comportement de solidification de la scorie recueillie.

9. Dispositif selon la revendication 8, **caractérisé en ce que** l'angle d'élargissement ($\alpha$) se produisant idéalement entre l'arête d'égouttage (15a) et le bord libre (16a) du tube de mélange (16) se situe dans la plage de 10° à 30°.

10. Dispositif selon la revendication 8, **caractérisé en ce que** le rayon de l'autre tube de mélange (16) est de 0,1 à 1 m plus grand que le rayon de l'arête d'égouttage (15a).

Fig. 1

Fig. 2 *a*

Fig. 2 *b*

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0616022 B1
- EP 0699734 A1
- EP 0400740 B1
- DE 102005048488 A
- EP 0431266 A1
- DE 102006029595 A1
- US 5782032 A
- EP 0400740 B
- EP 0431266 A
- DE 4025955 A1
- US 4369045 A